# EUROPÄISCHE PATENTSCHRIFT

(11) **EP 3 183 048 B1**
(45) Veröffentlichungstag und Bekanntmachung des Hinweises auf die Patenterteilung: **27.06.2018**
(21) Anmeldenummer: 15794057.8
(22) Anmeldetag: 19.08.2015
(51) Int. Cl.: B01D 35/02, B01D 29/33, E03B 3/02

(54) **REGENWASSERFILTER**
RAIN WATER FILTER
FILTRE D'EAU DE PLUIE

(30) Priorität: 22.08.2014 DE 102014012288
(43) Veröffentlichungstag der Anmeldung: 28.06.2017
(73) Patentinhaber: WISY AG Haustechniksysteme, Filtertechnik, 63699 Kefenrod (DE)
(72) Erfinder: DENK, Arnold, 63688 Gedern (DE); MAURER, Jan, 63699 Kefenrod (DE); JOST, Alfred, 63699 Kefenrod-Burgbracht (DE); SCHWEIZER, Alexander, 63633 Birstein (DE); PÖRSCHKE, Friedrich, W., 46240 Bottrop (DE)
(74) Vertreter: Hebing, Norbert
(86) Internationale Anmeldenummer: PCT/DE2015/000413
(87) Internationale Veröffentlichungsnummer: WO 2016/026479

(56) Entgegenhaltungen:
- EP-A2- 2 365 140

## Beschreibung

Die Erfindung bezieht sich auf einen Regenwasserfilter mit einem Gehäuse, das mit einem horizontal verlaufenden seitlichen Zulauf, einem horizontal verlaufenden seitlichen Restwasserablauf für nicht gefiltertes Wasser und einem Filterwasserablauf für gefiltertes Wasser versehen ist, wobei an den Zulauf im Gehäuse ein horizontal verlaufender oberer Wasserlauf anschließt, der zum Restwasserablauf führt, und mit einem Sieb zum Filtern des zulaufenden Wassers, dessen Siebfläche in horizontaler Richtung dem oberen Wasserlauf folgt, wobei der Restwasserablauf gegenüber dem Zulauf nach unten abgesetzt ist.

Ein derartiger Regenwasserfilter ist in der EP 2 365 140 A2 beschrieben. Das Sieb zum Filtern des zulaufenden Wassers ist ein flaches, sich in horizontaler Richtung erstreckendes Gravitationssieb. Das Wasser durchdringt auf Grund seiner Schwere unter Zurücklassung von Verunreinigungen das Sieb. Restwasser, das nicht gefiltert wurde, läuft zu einem Abfluss, der sich oberhalb des Siebs befindet.

In der DE 199 42 240 C2 ist ein Regenwasserfilter beschrieben, bei dem der Zulauf und der Restwasserablauf - bezogen auf die Einbaulage des Regenwasserfilters - auf gleicher Höhe liegen. Sie sind über ein horizontal verlaufendes Siebrohr, das den oberen Wasserlauf bildet, miteinander verbunden. Es erstreckt sich über den Filterwasserablauf. Das Wasser strömt über den Zulauf in das eine Ende des Siebrohres ein, wobei ein Teil des Wassers schwerkraftbedingt durch die Maschen des Siebrohres dringt und zum Filterwasserablauf fließt, während der andere Teil das Siebrohr durchläuft und zum Restwasserablauf gelangt.

Da der Zulauf und der Restwasserablauf auf gleicher Höhe liegen, ist die Höhe des Gehäuses relativ gering. Daher kann es auch ohne weiteres in ein Einstiegsloch einer Zisterne eingebaut werden.

Allerdings hat diese Anordnung den Nachteil, dass insbesondere bei einem geringen wasserdurchfluss die ausgefilterten Rückstände im Siebrohr liegen bleiben, die das Siebrohr nach und nach verstopfen, so dass es regelmäßig gereinigt werden muss.

Die Erfindung beruht somit auf der Aufgabe, einen Regenwasserfilter zu schaffen, der eine geringe Bauhöhe aufweist und der trotz eines geringen Versatzes zwischen dem Zulauf und dem Restwasserablauf selbstreinigend ist.

Zur Lösung der Aufgabe sieht die Erfindung vor, dass der Restwasserablauf gegenüber dem Zulauf nach unten abgesetzt ist, dass sich unterhalb des oberen Wasserlaufs ein horizontal verlaufender unterer Wasserlauf befindet, der in den Restwasserablauf übergeht und dass das Sieb so angeordnet ist, dass das von der Zulaufseite des Siebs ablaufende, nicht gefilterte Wasser auf den unteren Wasserablauf und von dort in den Restwasserablauf gelangt.

Bei dieser Art von Sieb findet eine vertikale Strömung entlang der im Wesentlichen vertikal ausgerichteten Siebfläche statt, was verhindert, dass sich dort Siebrückstände absetzen. Vielmehr werden diese - unterstützt durch die Schwerkraft - stets von der Zulaufseite des Siebs abgespült.

Vorzugsweise handelt es sich bei dem Sieb um ein Adhäsionssieb. Die Art von Regenwasserfiltern, bei denen das Wasser an einer im Wesentlichen vertikal ausgerichteten Siebfläche abläuft und dabei auf Grund von Adhäsionskräften durch das Sieb gezogen werden, ist z. B. aus der DE 38 12136 A1 bekannt. Das Sieb ist ein so genanntes Adhäsionssieb, das als Rohr ausgeführt und vertikal im Gehäuse des Regenwasserfilters angeordnet ist. Das zulaufende Wasser läuft vertikal in das Rohr und durch das Rohr in einem sich unterhalb des Rohres befindenden Restwasserablauf, der am Boden des Regenwasserfiltergehäuses angeordnet ist. Das durch das Adhäsionssieb gesogene Wasser gelangt in einen Sammelraum am unteren Ende eines Ringraumes zwischen dem Rohr und dem Gehäuse und wird dort über einen seitlichen Filterwasserablauf zu einer Zisterne weitergeleitet.

Um eine ausreichende Ausbeute zu erhalten, benötigt das Siebrohr eine gewisse Höhe, so dass der Abstand zwischen dem Zulauf am oberen Ende des Rohres und dem Filterwasserablauf am unteren Ende des Rohres relativ groß ist, was diese Art von Regenwasserfiltern nicht geeignet macht, im Einstiegsloch einer Zisterne untergebracht zu werden.

Da gemäß der Erfindung die vertikale Höhe des Siebs nicht sehr groß sein kann - der Versatz zwischen dem Zulauf und dem Restwasserablauf soll gering bleiben - wird eine gewisse Länge des Siebes benötigt. Dies wird dadurch erreicht, dass der obere Wasserlauf von einer Rinne gebildet ist, die an ihrem Boden einen Längsschlitz aufweist, wobei sich das Sieb unterhalb des Längsschlitzes befindet.

Das Wasser strömt demnach aus dem Zulauf über den oberen Wasserlauf in Richtung auf den Filterwasserablauf, wobei das Wasser auf seinem Weg entlang des oberen Wasserlaufs durch den Längsschlitz nach unten abläuft und dort auf das Sieb trifft. Dort läuft es vertikal entlang der Siebfläche und wird zum Teil durch das Sieb gesogen, während der nicht abgesogene Teil zum unteren Wasserablauf und von dort ebenfalls in den Restwasserablauf gelangt.

Damit das Wasser über die Länge des Längsschlitzes möglichst gleich verteilt in den Längsschlitz abfließt, ist vorgesehen, dass die Größe der lokalen Krümmung des Bodens der Rinne im Bereich des Längsschlitzes (10) vom Zulaufende zum Restwasserablaufende hin kleiner wird.

Die Rinne ist damit am Zulaufende flacher als am Restwasserablaufende. Da die Wassermenge am Zulaufende noch groß ist und der Wasserspiegel daher eine gewisse Höhe über dem Rinnenboden aufweist, wird das Wasser schon durch seinen Druck in Richtung auf den Längsschlitz gedrängt, so dass die Bodenbereiche zu beiden Seiten des Längsschlitzes keine große Querneigung (Neigung in Richtung auf den Längsschlitz) benötigen. Am Restwasserablaufende ist die Wassermenge aber schon kleiner geworden, was aber durch eine vergrößerte Quersteigung kompensiert wird.

Die Form des Rinnenbodens kann eine Ellipse, eine Zykloide oder vorzugsweise eine Klothoide sein, wobei sich zum Restwasserablaufende deren Parameter so ändern, dass dort ein Kreis vorliegt.

Um die Ausbeute zu vergrößern, werden zwei Siebflächen zur Verfügung gestellt. Dazu besteht das Sieb aus einer Halbschale mit einem U-förmigen Querschnitt, wobei die Halbschale mit ihrer offenen Seite nach unten auf dem unteren Wasserablauf aufsitzt und der Scheitel der Halbschale unter dem Längsschlitz verläuft. Die Siebflächen befinden sich in beiden Wänden der Halbschale.

Das durch den Längsschlitz fließende Wasser trifft somit auf den Scheitel der Halbschale und fließt zu beiden Seiten der Halbschalen weiter, den Siebflächen entlang, nach unten. Dabei gelangt der größte Teil des Wassers auf Grund von Adhäsionswirkung durch das Sieb in das Innere der Halbschale, wobei eine Filterung stattfindet.

Damit das gefilterte Wasser zu einem Filterwasserablauf gelangen kann, befindet sich in dem unteren Wasserlauf eine Längsöffnung zwischen den Seitenwänden der Halbschale, außerdem befindet sich unterhalb des Wasserlaufs eine Wanne, die mit dem Filterwasserablauf verbunden ist.

Das gefilterte Wasser strömt somit durch die Längsöffnung in diese Wanne und von dort weiter in den Filterwasserablauf. Die Wanne wirkt dabei als Puffer für den Fall, dass mehr gefiltertes Wasser anfällt, als dies unmittelbar in den Filterwasserablauf abfließen kann.

Um zu verhindern, dass ungefiltertes Wasser unter die Halbschale gelangt, ist diese an ihren Enden geschlossen.

In einer konkreten Ausführung besitzt das Gehäuse des Regenwasserfilters zwei gegenüberliegende Stirnwände, wobei sich in der einen Stirnwand der Zulauf und in der anderen Stirnwand der Restwasserablauf befindet. Zwischen den Stirnwänden verläuft ein zu beiden Seiten offener Hohlzylinder, der querschnittsgleich in den Restwasserablauf übergeht. Im oberen Teil des Hohlzylinders befindet sich ein Rohr, das querschnittsgleich an den Zulauf anschließt. Da das Rohr einen kleineren Querschnitt aufweist als der Hohlzylinder, bildet sich ein Sichelraum zwischen der Außenwand des Rohres und der Innenwand des Hohlzylinders. Dieser dient der Aufnahme des Siebs. Das Rohr bildet somit einen oberen Wasserlauf, während der Hohlzylinder den unteren Wasserablauf bildet.

Vorzugsweise sind die Stirnwände über einen halbschalenförmigen Boden miteinander verbunden, der die Wanne zur Aufnahme des gefilterten Wassers bildet, wobei die Längskanten des Bodens an der Außenseite des Hohlzylinders anliegen, um einen geschlossen Aufnahmeraum zu bilden.

Auch wenn diese Art von Sieb nicht dazu neigt, zu verstopfen, ist von Zeit zu Zeit trotz allem eine Reinigung notwendig. Daher sieht die Erfindung vor, dass der Hohlzylinder lösbar an den Stirnwänden gehalten ist. Dieser kann somit zur Reinigung dem Gehäuse entnommen werden.

Dazu ist vorgesehen, dass an der Innenseite der einen Stirnwand ein Halbbogen verläuft, in dem das eine Ende des Hohlzylinders von oben einsetzbar ist und an der Innenseite der anderen Stirnwand ein Kragen oder ein Absatz zur querschnittsgleichen Aufnahme des Rohres ausgebildet ist.

Im Folgenden soll anhand eines Ausführungsbeispieles die Erfindung näher erläutert werden. Dazu zeigen:
- Fig.1: eine Außenansicht eines erfindungsgemäßen Regenwasserfilters,
- Fig.2: einen Längsschnitt durch den Regenwasserfilter gemäß Fig. 1, der die Anordnung eines Siebes des Regenwasserfilters verdeutlicht,
- Fig.3: eine perspektivische Darstellung des Siebes und
- Fig.4: eine schematische Darstellung zur Verdeutlichung der Geometrie eines Rohres für die Zuführung von Wasser zum Sieb.

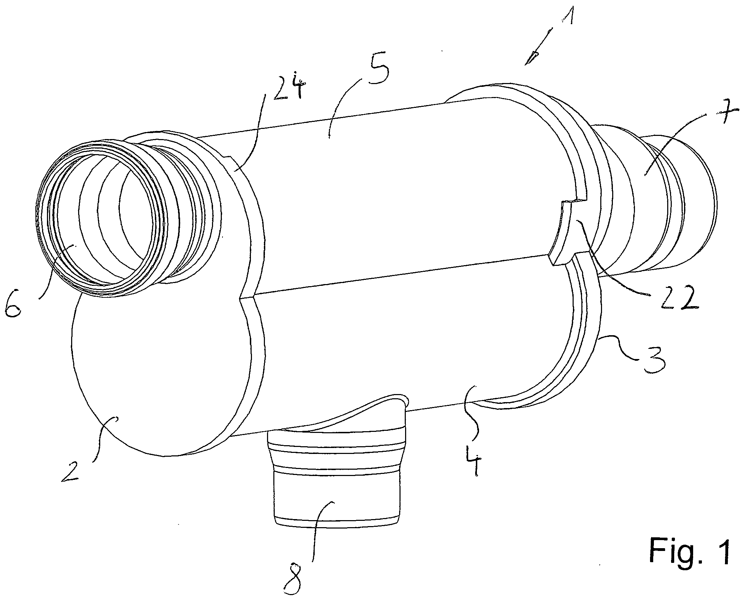

Es wird zunächst auf die Fig. 1 Bezug genommen. Der Regenwasserfilter besteht aus einem Gehäuse 1, das aus zwei Stirnwänden 2, 3 und einem die Stirnwände verbindenden halbschalenförmigen Boden 4 besteht. Oberhalb des Bodens 4 befindet sich ein Hohlzylinder 5, der sich von der einen Stirnseite 2 zur anderen Stirnseite erstreckt und an den die Längskanten des Bodens 4 anstoßen.

An der einen Stirnwand 2 befindet sich ein Zulauf 6 in Form eines Anschlussstutzens und an der anderen Stirnwand 3 ein Restwasserablauf 7, ebenfalls in Form eines Anschlussstutzens, wobei der Querschnitt des Restwasserablaufs im Bereich der Stirnwand 3 größer ist als der Durchmesser des Zulaufes 6.

Die Achsen des Zulaufes 6 und des Restwasserablaufs 7 sind gegeneinander versetzt. Der Restwasserablauf 7 befindet sich etwas tiefer als der des Zulaufes 6.

An der Unterseite des Bodens befindet sich ein Filterwasserablauf 8.

Die gewählten Bezeichnungen "oben" und "unten" beziehen sich auf den in der Fig. 1 gezeigten Einbaulagepunkt. Dies ist dadurch gekennzeichnet, dass der Zulauf 6 und der Restwasserablauf 7 im Wesentlichen horizontal verlaufen, während der Filterwasserablauf 8 vertikal nach unten zeigt.

Der Anschlussstutzen des Restwasserablaufs 7 erhält eine stufenweise Querschnittsverengung, wobei die Bodenlinie auf gleicher Höhe verbleibt. Dies ermöglicht den Anschluss von weiterführenden Rohren mit unterschiedlichen Querschnitten.

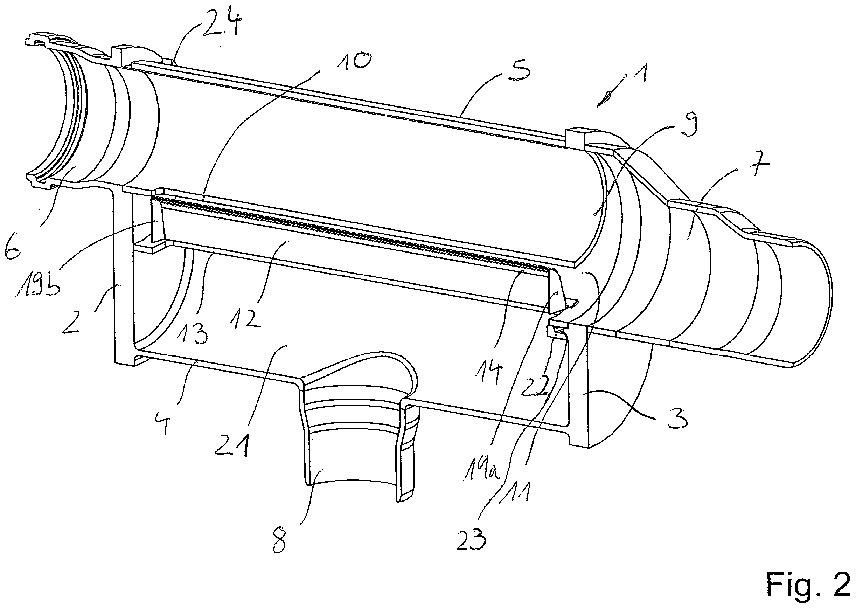

Aus dem Längsschnitt der Fig. 2 ergibt sich der innere Aufbau des Regenwasserfilters.

Innerhalb des Hohlzylinders 5 befindet sich ein Rohr 9 kleineren Querschnitts, das mit einer Mantellinie an der oberen Mantellinie des Hohlzylinders 5 befestigt ist. In der gegenüberliegenden unteren Mantellinie des Rohres 9 befindet sich ein Längsschlitz 10, der an dem zum Restwasserablauf 7 weisenden Ende des Rohres 9 randoffen ist.

Am Ende des Zulaufes 6 ragt das Rohr 9 über den Hohlzylinder 5 hinaus und ist dort in dem Zulauf 6 querschnittsgleich eingesteckt, so dass alles Wasser, das durch den Zulauf 6 zum Regenwasserfilter fließt, in das Rohr 9 gelangt.

Da das Rohr 9 kleiner ist als der Hohlzylinder 5 und an einer Mantellinie an diesem befestigt ist, bildet sich ein Sichelraum 11 im unteren Bereich des Hohlzylinders 5. Hier befindet sich ein Sieb 12 oberhalb einer Längsöffnung 13 in einer unteren Mantellinie des Hohlzylinders 5.

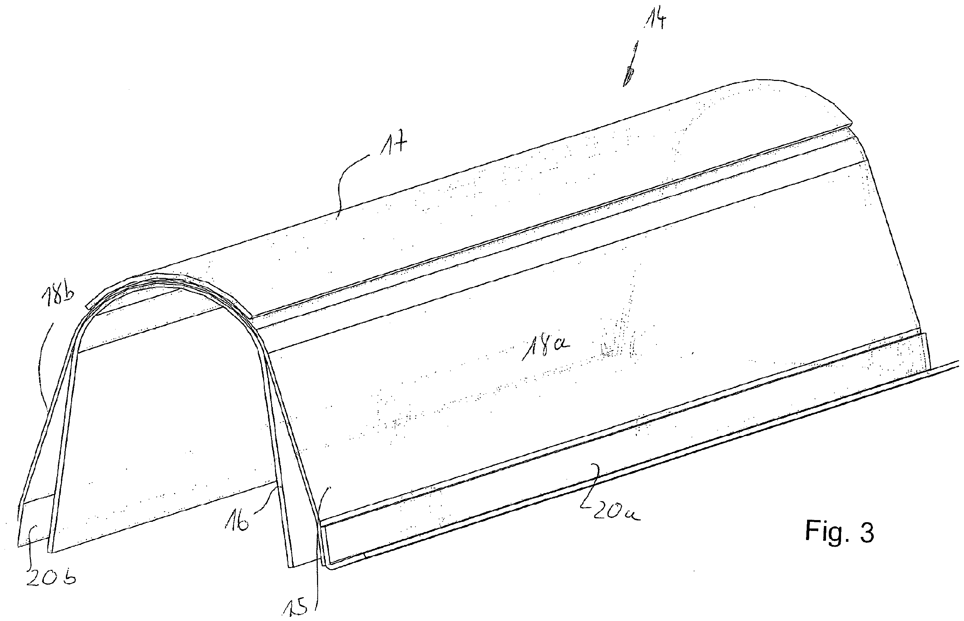

Wie aus der Fig. 3 hervorgeht, besteht das Sieb 12 aus einer tunnelförmigen Halbschale 14, die aus zwei Lagen 15, 16 zusammengesetzt ist. Die Lagen liegen am Scheitelbereich der Halbschale aneinander und weisen zu den Längskanten der Halbschale 14 hin einen immer größeren Abstand zueinander auf.

Auf dem Scheitel der Halbschale 14 befindet sich noch eine wasserundurchdringliche Abdeckung 17. Die Seitenwände 18a, 18b der äußeren Lage 15 sind als Siebflächen ausgebildet. Am unteren Rand jeder Siebfläche befinden sich jeweils ein Abweisblech 20a, 20b in Form eines länglichen Streifens, der mit seiner unteren Längskante am Boden des Hohlzylinders anschließt. Die Abweisbleche 20, 20a weisen eine geschlossene glatte Oberfläche auf. Eine solche Oberfläche bildet für das auf den Boden des Hohlzylinders 5 in Richtung auf den Restwasserablauf abfließende Wasser kein Hindernis, wie dies eine poröse Siebfläche sein würde.

Wie schon erläutert, läuft das Wasser durch den Längsschlitz 10 des Rohres 9 auf den Scheitel der Halbschale 14, und läuft dort zu beiden Seiten der Abdeckung 17 auf die jeweilige Seitenfläche 18a, 18b. Da diese im Wesentlichen vertikal ausgerichtet sind, würde der Großteil des Wassers normalerweise an diesen abfließen, ohne nach innen in die Halbschale 14 zu gelangen.

Dazu ist die innere Lage 16 vorgesehen, die als Adhäsionselement wirkt und das an der äußeren Lage 15 fließende Wasser durch die Siebflächen in den Seitenwänden 18a, 18b zieht. Das zugrunde liegende Adhäsions-Prinzip ist in der DE 199 42 240 C2 näher beschrieben.

Der größte Teil des Wassers gelangt somit durch die als Siebflächen wirkenden Seitenflächen 18a, 18b in den inneren Bereich der Halbschale 14 und kann dort durch den Längsschlitz 13 in die Wanne 19 fließen, von wo es über den Filterwasserablauf 8 nach außen, z. B. in eine Zisterne gelangt.

Damit das zu filternde Wasser nicht an den Siebflächen vorbei in den inneren Bereich der Halbschale 14 gelangt, ist diese an ihren Enden durch zwei Kappen 19a, 19b abgedeckt.

Um den Regenwasserfilter reinigen zu können, kann der Hohlzylinder 5 entnommen werden. Dazu befindet sich an der Stirnwand 3 mit dem Restwasserablauf 7 ein halbkreisförmiger Bogen 22, an dessen Innenseite eine Dichtung 23 einliegt. Der Durchmesser des Bogens 22 entspricht dem Durchmesser des Hohlzylinders 5, so dass dieser von oben in den Bogen 22 eingelegt werden kann. Auf der anderen Seite wird das Rohr 9 schräg axial eingeführt, wobei zur weiteren Stützung ein Absatz bzw. Kragen 24 vorgesehen ist, der den Hohlzylinder 5 nahezu vollständig umgreift.

Der Regenwasserfilter arbeitet wie folgt: Das Wasser, das durch den Zulauf 6 in das Gehäuse 1 gelangt, fließt vollständig in das Rohr 9 hinein, wobei es nach und nach durch den Längsschlitz 10 am Boden des Rohres 9 abläuft. Nur bei einem sehr großen Wasseranfall ist der Längsschlitz 10 nicht in der Lage, das Wasser aufzunehmen, so dass ein Teil des Wassers durch das Rohr 9 unmittelbar in den Restwasserablauf 7 fließt. Das Rohr 9 wirkt somit als oberer Wasserlauf.

Das Wasser, das durch den Längsschlitz 10 in den Sichelraum 11 gelangt, läuft von oben auf die Abdeckung 17 der Halbschale und läuft dort zu beiden Seiten an Siebflächen entlang und wird dabei weitgehend durch die oben beschriebene Adhäsionswirkung nach innen in die Halbschale 14 gesogen. Der Rest des Wassers, das an der Halbschale 14 abfließt, verbleibt im Hohlzylinder 5, dessen Boden somit als unterer Wasserlauf fungiert, und fließt von dort ebenfalls in den Restwasserablauf 7.

Das gefilterte Wasser gelangt durch den Längsschlitz 13 im Boden des Hohlzylinders 5 in die Wanne 20 und von dort zum Filterwasserablauf 8. Da sich das Gehäuse 1 in der Regel im Einstiegsloch einer Zisterne befindet, gelangt es von dort unmittelbar in den Sammelraum der Zisterne.

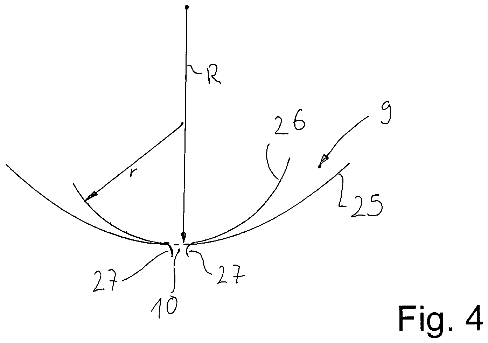

Um den Ablauf des Wassers in den Längsschlitz zu optimieren, weist das Rohr 9 eine sich vom Zulauf zum Restwasserablauf ändernde Querschnittsform auf, was in der Fig. 4 dargestellt ist. Diese zeigt übereinander gelegt den Bodenverlauf 25 um den Längsschlitz 10 im Bereich des Zulaufs und den Bodenverlauf 26 um den Längsschlitz 10 im Bereich des Restwasserablaufs. Während die Querschnittsform des Bodens im Bereich des Restwasserablaufs einem Kreis mit dem Radius r entspricht, folgt der Boden im Bereich des Zulaufs einer Klothoide, wobei der Radius R ihrer Krümmung am Längsschlitz 10 größer ist als r und nach außen hin kleiner wird. Der Radius R der Krümmung wird für jeden Querschnitt, der näher zum Restwasserablauf liegt, kleiner, bis er dem Radius r des Kreises im Bereich des Restwasserablaufs entspricht. Auch der Parameter, der jeweils die Änderung der Krümmung einer Klothoide definiert, wird laufend angepasst, um den Übergang in den Kreis zu bewerkstelligen.

Um den Abfluss in den Längsschlitz 10 zu unterstützen, kann vor allem im Bereich vor dem Restwasserablauf an beiden Ränder des Längsschlitzes 10 jeweils eine nach unten weisende konvex gekrümmte Lippe 27 vorgesehen werden.

**Bezugszeichenliste**

| | | | |
|---|---|---|---|
| 1 | Gehäuse | 16 | innere Lage |
| 2 | Stirnwand | 17 | Abdeckung |
| 3 | Stirnwand | 18a | Seitenwand |
| 4 | Boden | 18b | Seitenwand |
| 5 | Hohlzylinder | 19a | Kappe |
| | | | |
| 6 | Zulauf | 19b | Kappe |
| 7 | Restwasserablauf | 20a | Abweisblech |
| 8 | Filterwasserablauf | 20b | Abweisblech |
| 9 | Rohr | 21 | Wanne |
| 10 | Längsschlitz | 22 | Bogen |
| | | 23 | Dichtung |
| 11 | Sichelraum | 24 | Kragen |
| 12 | Sieb | | |
| 13 | Längsöffnung | 25 | Bodenverlauf |
| 14 | Halbschale | 26 | Bodenverlauf |
| 15 | äußere Lage | 27 | Lippe |

## Patentansprüche

1. Regenwasserfilter mit einem Gehäuse (1), das mit einem horizontal verlaufenden seitlichen Zulauf (6), einem horizontal verlaufenden seitlichen Restwasserablauf (7) für nicht gefiltertes Wasser und einem Filterwasserablauf (8) für gefiltertes Wasser versehen ist, wobei an den Zulauf (6) im Gehäuse ein horizontal verlaufender oberer Wasserlauf anschließt, der zum Restwasserablauf (7) führt, und mit einem Sieb (12) zum Filtern des zulaufenden Wassers, dessen Siebfläche in horizontaler Richtung dem oberen Wasserlauf folgt, wobei der Restwasserablauf (7) gegenüber dem Zulauf (6) nach unten abgesetzt ist, **dadurch gekennzeichnet, dass** sich unterhalb des oberen Wasserlaufs ein horizontal verlaufender unterer Wasserlauf befindet, der in den Restwasserablauf (7) übergeht, und dass das Sieb (12) so angeordnet ist, dass das von der Zulaufseite des Siebs (12) ablaufende, nicht gefilterte Wasser auf den unteren Wasserlauf und von dort in den Restwasserablauf (7) gelangt.

2. Regenwasserfilter nach Anspruch 1, **dadurch gekennzeichnet, dass** das Sieb (12) ein Adhäsionssieb ist.

3. Regenwasserfilter nach Anspruch 1 oder 2, **dadurch gekennzeichnet, dass** der obere Wasserlauf von einer Rinne gebildet ist, die an ihrem Boden einen Längsschlitz (10) aufweist, wobei sich das Sieb (12) unterhalb des Längsschlitzes (10) befindet.

4. Regenwasserfilter nach Anspruch 3, **dadurch gekennzeichnet, dass** die Größe der lokalen Krümmung des Bodens der Rinne im Bereich des Längsschlitzes (10) vom Zulaufende zum Restwasserablaufende hin kleiner wird.

5. Regenwasserfilter nach Anspruch 2, 3 oder 4, **dadurch gekennzeichnet, dass** das Sieb (12) von einer Halbschale (14) mit einem U-förmigen Querschnitt gebildet ist, wobei die Halbschale (14) mit ihren offen Seite nach unten auf dem unteren Wasserlauf aufsitzt und der Scheitel der Halbschale (14) unter dem Längsschlitz (10) verläuft.

6. Regenwasserfilter nach Anspruch 5, **dadurch gekennzeichnet, dass** der untere Wasserlauf eine Längsöffnung (13) aufweist, die zwischen den Seitenwänden (18a, 18b) der Halbschale (14) verläuft, wobei sich unterhalb des unteren Wasserlaufs ein Wanne (20) befindet, die mit dem Filterwasserablauf (8) verbunden ist.

7. Regenwasserfilter nach Anspruch 6, **dadurch gekennzeichnet, dass** die Halbschale (14) an ihren Enden geschlossen ist.

8. Regenwasserfilter nach einem der vorhergehenden Ansprüche, **dadurch gekennzeichnet, dass** das Gehäuse (1) zwei gegenüberliegende Stirnwände (2, 3) aufweist, wobei sich in der einen Stirnwand (2) der Zulauf (6) und in der anderen Stirnwand (3) der Restwasserablauf (7) befindet, dass zwischen den Stirnwänden (2, 3) ein zu beiden Seiten offener Hohlzylinder (5) verläuft, der querschnittsgleich in den Restwasserablauf (7) übergeht, dass sich im oberen Teil des Hohlzylinders (5) ein Rohr (9) befindet, das querschnittsgleich an den Zulauf (6) anschließt, und dass sich in dem Sichelraum (11) zwischen der Außenwand des Rohres (9) und der Innenwand des Hohlzylinders (5) das Sieb (12) befindet.

9. Regenwasserfilter nach Anspruch 8, **dadurch gekennzeichnet, dass** die Stirnwände (2, 3) über einen halbschalenförmigen Boden (4) miteinander verbunden sind, der die Wanne (20) bildet, wobei die Längskanten des Bodens (4) gegenüberliegend an der Außenseite des Hohlzylinders (5) anliegen.

10. Regenwasserfilter nach Anspruch 8 oder 9, **dadurch gekennzeichnet, dass** der Hohlzylinder (5) lösbar an den Stirnwänden (2, 3) gehalten ist.

11. Regenwasserfilter nach Anspruch 10, **dadurch gekennzeichnet, dass** an der Innenseite der einen Stirnwand (3) ein Halbbogen (22) verläuft, in dem das eine Ende des Hohlzylinders (5) von oben einsetzbar ist und an der Innenseite der anderen Stirnwand (2) ein Kragen (24) oder ein Absatz zur querschnittsgleichen Aufnahme des Rohres (9) ausgebildet ist.

## Claims

1. Rain water filter having a housing (1), which is provided with a horizontally running lateral inlet (6), a horizontally running lateral residual water outlet (7) for unfiltered water and a filter water outlet (8) for filtered water, wherein a horizontally running upper water course connects to the inlet (6) in the housing and leads to the residual water outlet (7), and having a filter (12) for filtering the inflowing water, wherein the filter surface of the filter follows the upper water course in a horizontal direction, wherein the residual water outlet (7) is downwardly offset in relation to the inlet (6), **characterized in that** a horizontally running lower water course is located below the upper water course and merges into the residual water outlet (7), and that the filter (12) is arranged such that the unfiltered water running off from the inlet side of the filter (12) reaches the lower water course and from there the residual water outlet (7).

2. Rain water filter according to Claim 1, **characterized in that** the filter (12) is an adhesive filter.

3. Rain water filter according to Claim 1 or 2, **characterized in that** the upper water course is formed by a channel, which has a longitudinal slot (10) in its floor, wherein the filter (12) is located below the longitudinal slot (10).

4. Rain water filter according to Claim 3, **characterized in that** the size of the local curvature of the floor of the channel gets smaller in the region of the longitudinal slot (10) from the inlet end towards to the residual water outlet end.

5. Rain water filter according to Claim 2, 3 or 4, **characterized in that** the filter (12) is formed by a half shell (14) with a U-shaped cross-section, wherein the half shell (14) sits with its open side downward on the lower water course and the apex of the half shell (14) runs below the longitudinal slot (10).

6. Rain water filter according to Claim 5, **characterized in that** the lower water course comprises a longitudinal opening (13), which runs between the lateral walls (18a, 18b) of the half shell (14), wherein a tank (20) is located below the lower water course and is connected to the filter water outlet (8).

7. Rain water filter according to Claim 6, **characterized in that** the half shell (14) is closed at its ends.

8. Rain water filter according to one of the preceding claims, **characterized in that** the housing (1) comprises two opposing end walls (2, 3), wherein the inlet (6) is located in the one end wall (2) and the residual water outlet (7) is located in the other end wall (3), that a hollow cylinder (5) that is open on both sides runs between the end walls (2, 3) and merges with a uniform cross-section into the residual water outlet (7), that a pipe (9) is located in the upper portion of the hollow cylinder (5) and connects with a uniform cross-section to the inlet (6), and that the filter (12) is located in the crescent space (11) between the outer wall of the pipe (9) and the inner wall of the hollow cylinder (5).

9. Rain water filter according to claim 8, **characterized in that** the end walls (2, 3) are connected to each other via a half-shell-shaped base (4), which forms the tank (20), wherein the longitudinal edges of the base (4) lie oppositely against the outer side of the hollow cylinder (5).

10. Rain water filter according to Claim 8 or 9, **characterized in that** the hollow cylinder (5) is held detachably on the end walls (2, 3).

11. Rain water filter according to Claim 10, **characterized in that** a half-arc (22) runs on the inner side of the one end wall (3), into which the one end of the hollow cylinder (5) can be inserted from above, and a collar (24) or an offset for the uniform cross-sectional accommodation of the pipe (9) is formed on the inner side of the other end wall (2).

## Revendications

1. Filtre d'eau de pluie avec un boîtier (1) qui est doté d'une arrivée (6) latérale passant horizontalement, d'un écoulement d'eau résiduelle (7) latéral passant horizontalement pour l'eau non filtrée et un écoulement d'eau filtrée (8) pour l'eau filtrée, un écoulement d'eau supérieur passant horizontalement se raccordant à l'arrivée (6) dans le boîtier, qui va à l'écoulement d'eau résiduelle (7) et avec un tamis (12) pour filtrer l'eau arrivant, dont la surface de tamisage suit l'écoulement d'eau supérieur en direction horizontale, l'écoulement d'eau résiduelle (7) étant dirigé vers le bas par rapport à l'arrivée (6), **caractérisé en ce qu'**un écoulement d'eau inférieur passant horizontalement se trouve en dessous de l'écoulement d'eau supérieur, qui passe dans l'écoulement d'eau résiduelle (7) et **en ce que** le tamis (12) est disposé de telle manière que l'eau non filtrée s'écoulant du côté arrivée du tamis (12) parvient à l'écoulement d'eau inférieur et de là dans l'écoulement d'eau résiduelle (7).

2. Filtre d'eau de pluie selon la revendication 1, **caractérisé en ce que** le tamis (12) est un tamis par adhérence.

3. Filtre d'eau de pluie selon la revendication 1 ou 2, **caractérisé en ce que** l'écoulement d'eau supérieur est formé par une gouttière qui comporte une fente longitudinale (10) dans son fond, le tamis (12) se trouvant en dessous de la fente longitudinale (10).

4. Filtre d'eau de pluie selon la revendication 3, **caractérisé en ce que** la taille de la courbure locale du fond de la gouttière dans la zone de la fente longitudinale (10) devient plus petite de l'extrémité d'arrivée à l'extrémité d'écoulement d'eau résiduelle.

5. Filtre d'eau de pluie selon la revendication 2, 3 ou 4, **caractérisé en ce que** le tamis (12) est formé par une demi-coque (14) avec une section en forme de U, la demi-coque (14) reposant avec son côté ouvert vers le bas sur l'écoulement d'eau inférieur et le sommet de la demi-coque (14) passant sous la fente longitudinale (10).

6. Filtre d'eau de pluie selon la revendication 5, **caractérisé en ce que** l'écoulement d'eau inférieur comporte une ouverture longitudinale (13) qui passe entre les parois latérales (18a, 18b) de la demi-coque (14), un cuvelage (20) se trouvant en dessous de l'écoulement d'eau inférieur, qui est relié à l'écoulement d'eau filtrée (8).

7. Filtre d'eau de pluie selon la revendication 6, **caractérisé en ce que** la demi-coque (14) est fermée à ses extrémités.

8. Filtre d'eau de pluie selon l'une quelconque des revendications précédentes, **caractérisé en ce que** le boîtier (1) comporte deux parois frontales opposées (2, 3), l'arrivée (6) se trouvant dans la première paroi frontale (2) et l'écoulement d'eau résiduelle (7) dans l'autre paroi frontale (3), **en ce qu'**entre les parois frontales (2, 3) passe un cylindre creux (5) ouvert sur les deux côtés qui passe en section identique dans l'écoulement d'eau résiduelle (7), **en ce qu'**un conduit (9) se trouve dans la partie supérieure du cylindre creux (5) qui se raccorde à l'arrivée (6) en section identique et **en ce que** le tamis (12) se trouve dans l'espace falciforme (11) entre la paroi extérieure du conduit (9) et la paroi intérieure du cylindre creux (5).

9. Filtre d'eau de pluie selon la revendication 8, **caractérisé en ce que** les parois frontales (2, 3) sont reliées entre elles par un fond (4) en forme de demi-coque, qui forme le cuvelage (20), les bords longitudinaux du fond (4) venant s'appliquer de façon opposée au côté extérieur du cylindre creux (5).

10. Filtre d'eau de pluie selon la revendication 8 ou 9, **caractérisé en ce que** le cylindre creux (5) est maintenu amovible sur les parois frontales (2, 3).

11. Filtre d'eau de pluie selon la revendication 10, **caractérisé en ce qu'**un demi-cercle (22) passe sur le côté intérieur d'une paroi frontale (3), dans lequel une extrémité du cylindre creux (5) peut être insérée par le haut et une collerette (24) ou un talon est constitué sur le côté intérieur de l'autre paroi frontale (2) pour recevoir en section identique le conduit (9).
